# EUROPEAN PATENT APPLICATION

(11) **EP 2 237 297 A1**
(43) Date of publication of application: **06.10.2010**
(21) Application number: 07860529.2
(22) Date of filing: 28.12.2007
(51) Int. Cl.: H01H 19/14, B60R 11/02, G05G 1/08

(54) **SUPPORT STRUCTURE FOR OPERATION KNOB AND ELECTRONIC APPARATUS WITH THE SUPPORT STRUCTURE**

(71) Applicant: Pioneer Corporation, Tokyo 153-8654 (JP)
(72) Inventor: YOSHIDA, Takanori, Kawagoe-shi Saitama 350-8555 (JP)
(74) Representative: Grünecker, Kinkeldey, Stockmair & Schwanhäusser Anwaltssozietät
(86) International application number: PCT/JP2007/075326
(87) International publication number: WO 2009/084115

(57) **Abstract**

There is provided an operation knob supporting structure having a main body portion mounted to an instrument panel having a slanted surface, in which when a predetermined force is applied to an operation knob a fragile portion thereof fractures, allowing the operation knob to retract into the main body portion until a projection thereof from the main body portion is less than a predetermined value. AV equipment 1 includes a case 2 and a support structure 12 having the operation knob 15, a support portion 21 supporting the operation knob 15 and the fragile portion 22 which fractures when a force pushing the operation knob 15 towards a front face 2a of the case 2 exceeds the predetermined force. The operation knob 15 includes a tilt regulating portion 26 having an end face 26a arranged to closely contact with a surface 36a of a printed wiring board 36 of the support portion 21 when the fragile portion 22 fractures, preventing the operation knob 15 from tilting.

## Description

### Field of the Invention

The present invention relates to an operation knob supporting structure employed to various electric equipment such as AV equipment. The present invention further relates to electric equipment having the above-described operation knob supporting structure.

### Description of the Related Art

Electric equipment, such as AV equipment mounted to a motor vehicle for reading-out and playing information stored in an optical disk such as CD (Compact Disk), are required to comply with the ECE regulations No. 21 - uniform provisions concerning the approval of vehicles with regard to their interior fittings.

In the above-mentioned regulations, switches such as operation knobs are required not to project more than a predetermined value, such as 9.5 mm, from a surface of an instrument panel of a vehicle or a front face (an outer surface) of an equipment main body as a main body portion of the electric equipment mounted to the instrument panel. Alternatively, in case of those operation knobs projecting more than 9.5 mm, these operation knobs are required to be so designed as to be able, under the effect of a predetermined force such as 382N in a longitudinal direction of the vehicle (horizontal direction) pushing the operation knob towards the surface of the instrument panel or the front face of the equipment main body, to retract into the surface of the instrument panel or the front face of the equipment main body until the operation knob does not project by more than the predetermined value such as 9.5 mm.

In order to comply with the above-described requirements, there has been provided various operation knob supporting structure 100 (shown in Fig. 1, refer for example to Patent Literature 1). The operation knob supporting structure 100 shown in Fig. 1 includes: a support portion 103 supporting an operation knob 102 so the operation knob 102 can move with respect to an equipment main body 101 of the above-described electric equipment; and a fragile portion 104. The operation knob 102 is provided with a knob main body 105 and a decorative panel 106.

The knob main body 105 includes: an inner tube 112 and an outer tube 113 each formed into a cylinder-like shape and arranged concentrically with respect to each other; and a ring-like connection portion 114 connecting the respective tubes 112, 113, all of which formed in one. The decorative panel 106 is arranged into a circular plate and mounted to an end of the outer tube 113 exposed on the outside of the equipment main body 101. The decorative panel 106 is arranged with a space from an end of the inner tube 112. The electric equipment is mounted to an instrument panel so that a front face 101a of the equipment main body 101 is parallel with a surface of the instrument panel.

The support portion 103 includes: a printed wiring board 107 received in the equipment main body 101 and fixed in parallel with the front face 101a of the equipment main body 101; and a switch unit 108 mounted to the printed wiring board 107. The switch unit 108 includes a switch main body 109 fixed to the printed wiring board 107 and an operation shaft 110 projecting from the switch main body 109 and arranged to rotate about as well as retract into and project from the switch main body 109. The operation shaft 110 is formed into a cylinder-like shape and is press-inserted into the inner tube 112 to mount the operation knob 102. Thus, the operation shaft 110 allows the operation knob 102 to rotate about a central axis of the operation knob 102 as well as retract into and project from the front face 101a. Accordingly, the operation knob 102 can move with respect to the equipment main body 101. Furthermore, the operation knob 102 is arranged perpendicularly with respect to the front face 101a of the equipment main body 101.

The fragile portion 104 includes a projection portion 111 arranged spaced apart from the decorative panel 106 of the operation knob 102 and arranged to project radially and inwardly from an end of the inner tube 112 close to the decorative panel 106. For the fragile portion 104, when the above-described predetermined horizontal force is applied to the operation knob 102, a portion between the projection portion 111 and an inner circumferential face of the inner tube 112 fractures, thereby allowing a projection of the operation knob 102 from the front face 101a of the equipment main body 101 to be less than the predetermined value.
[Patent Literature 1] Japanese Patent Application Publication No. 2006-210288

### Summary of the Invention

### Technical Problem

For the above-described instrument panel of the vehicle, the surface of the instrument panel is usually arranged not parallel with a vertical direction but slanted towards a front side of the vehicle, due to a design variation of the vehicle. Thus, if the electric equipment is mounted to such instrument panel having slanted surface, the front face 101a of the equipment main body 101 of the electric equipment which is arranged parallel with the surface of the instrument panel is also slanted. Consequently, a longitudinal direction of the operation shaft 110 of the switch unit 108 is also slanted with respect to the longitudinal direction of the vehicle (horizontal direction).

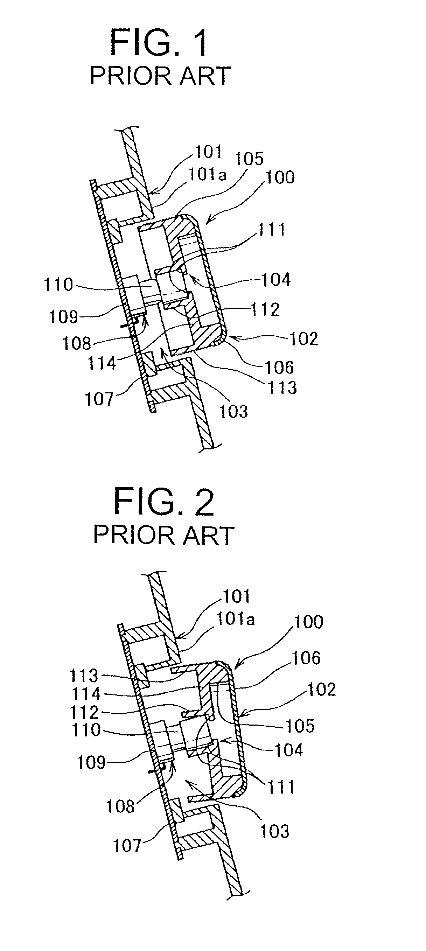

Thus, if the force along the above-described direction is applied to the operation knob 102, firstly the operation shaft 110 retracts into the switch main body 109, then the operation knob 102 rotates about the switch unit 109 so that an outer surface of the decorative panel 106 of the operation knob 102 is parallel to the vertical direction, as shown in Fig. 2. In this case, even if the projection portion 111 of the fragile portion 104 is fractured, a projection of an upper end of the operation knob 102 from the front face 101 a may exceed the predetermined value, thus failing to meet the above-described requirements.

In view of the above-described problems, an object of the present invention is to provide an operation knob supporting structure, in which a main body portion thereof is mounted to an instrument panel having a slanted surface, having a fragile portion arranged to fracture when a predetermined force is applied to allow an operation knob to retract into the main body portion. Another object of the present invention is to provide electric equipment having the above-described operation knob supporting structure.

### Solution to Problem

In order to solve the above-described problems and achieve the above-described object, there is provided an operation knob supporting structure, including: an operation knob projecting from an outer surface of a main body portion and arranged to move with respect to the main body portion, the main body portion being slanted with respect to a vertical direction; a support member supporting the operation knob; an installation member to which the support member is installed; a fragile portion arranged to fracture when a horizontal force pushing the operation knob towards the outer surface exceeds a predetermined force to allow the operation knob to retract into the outer surface of the main body portion; a tilt regulating portion arranged to contact with the installation member when the fragile portion is fractured to forbid the operation knob from tilting.

### Brief Description of the Drawings

Fig. 1 is a cross sectional view of a conventional operation knob supporting structure;
Fig. 2 is a cross sectional view showing a state in which a horizontal pushing force is applied to the operation knob of Fig. 1;
Fig. 3 is a perspective view of AV equipment having an operation knob supporting structure according to one embodiment of the present invention;
Fig. 4 is a cross sectional view of the operation knob supporting structure shown in Fig. 3;
Fig. 5 is a cross sectional view showing a state in which a horizontal pushing force is applied to the operation knob of Fig. 4; and
Fig. 6 is a cross sectional view showing a state in which a fragile portion of the operation knob supporting structure shown in Fig. 5 is fractured.

### Reference Signs List

- 1: AV equipment (electric equipment)
- 2: case (main body portion)
- 2a: front face (outer surface)
- 12: operation knob supporting structure
- 15: operation knob
- 22: fragile portion
- 23: mounting member
- 24: exposed member
- 26: tilt regulating portion
- 26a: end face (second flat face)
- 27: engagement portion
- 36: printed wiring board (installation member)
- 36a: surface (flat face)
- 37: switch (support member)
- 39: switch main body
- 40: operation shaft
- F: pushing force

### Description of Embodiments

One embodiment of the present invention is explained below. An operation knob supporting structure according to one embodiment of the present invention includes a tilt regulating portion arranged to contact with an installation member when a fragile portion is fractured to forbid an operation knob from tilting. Thus, when the fragile portion fractures, the tilt regulating portion will certainly contact with the installation member to forbid the operation knob from tilting. Consequently, when the predetermined force is applied to the operation knob, the fragile portion will certainly fracture, and the operation knob is allowed to retract into a main body portion until a projection of the operation knob from the main body portion is less than the predetermined value.

Furthermore, in the present invention, the tilt regulating portion may be provided with a second flat face arranged so as to closely contact with a flat face of the installation member. In this case, when the fragile portion fractures, the flat face and the second flat face will closely contact each other in an overlapping relationship. Accordingly, the operation knob can effectively be prevented from tilting.

Furthermore, the operation knob may include: a mounting member mounted to an outer circumference of an operation shaft of a switch as a support member; and an exposed member mounted to an outer circumference of the mounting member and having the fragile portion arranged between the mounting member and the exposed member. Thus, even if the exposed member tends to tilt about the fragile portion due to a horizontal force towards an outer surface applied to the exposed member of the operation knob, a large diameter between the fragile portion and the mounting member will firm hold the exposed member. Consequently, the exposed member is prevented from tilting. As a result, the exposed member, i.e. the operation knob, is further effectively prevented from tilting with respect to the main body portion.

Furthermore, the mounting member may include an engagement portion arranged to engage with an inner circumferential face of the exposed member. In this case, when a horizontal force towards the outer surface is applied to the exposed member of the operation knob, the mounting member can hold the exposed member via the engagement portion, thereby forbidding the exposed member of the operation knob from rotating.

Furthermore, in the present invention, there may be provided electric equipment having the above-described operation knob supporting structure. In this case, since the electric equipment is provided with the above-described operation knob supporting structure, when the predetermined force is applied to the operation knob, the fragile portion will certainly fracture and the operation knob is allowed to retract into the main body portion until a projection of the operation knob from the main body portion is less than the predetermined value.

### Exemplary Embodiment

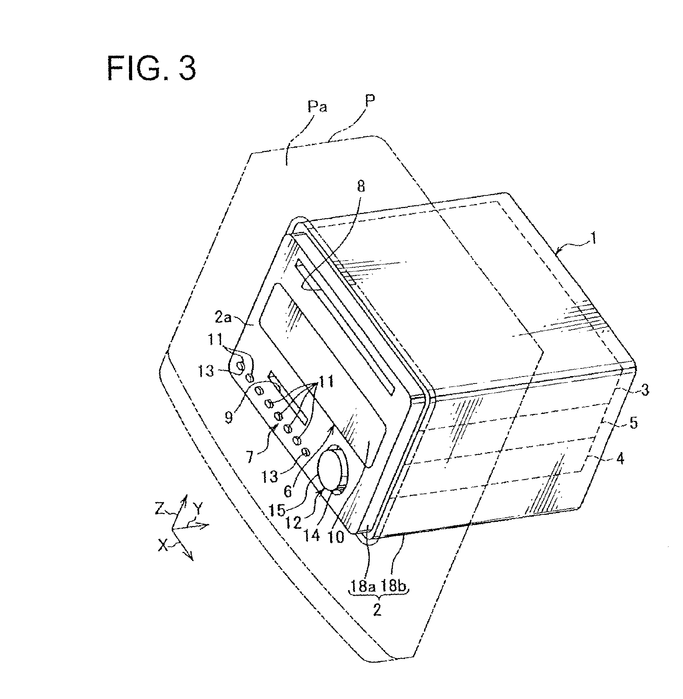

One embodiment of the present invention will be explained in reference with Fig. 3 through Fig. 6. AV (Audi-Visual) equipment 1 as electric equipment according to one embodiment of the present invention is mounted for example to an instrument panel P (indicated with a dotted line in Fig. 3) of a motor vehicle as a moving body. In the following: a depth direction corresponds to an arrow Y which is parallel to a surface of a later-described CD or MD and which is parallel to a direction of insertion/ejection of the CD or MD; a width direction corresponds to an arrow X which is parallel to a surface of the CD or MD and which is perpendicular to the depth direction Y; and a thickness direction corresponds to an arrow Z which is perpendicular to both of the depth direction Y and the width direction X. In addition, a surface Pa of the instrument panel P is slanted relative to a vertical direction towards a front side of the vehicle.

As shown in Fig. 3, the AV equipment 1 includes a case 2 as a main body portion, a CD (Compact Disc) player 3 as a sound box, a MD (Mini disc) player 4 as a sound box, an AM/FM tuner 5 for receiving a radio broadcasting, a display portion 6 and an operation portion 7.

The case 2 is formed into a box-like shape and has a front panel 18a made of a synthetic resin and a case main body 18b constituted of a metal plate. With a front panel 18a mounted to a left-hand side of the case main body 18b in Fig. 3, the case 2 is mounted to the instrument panel P. For the case 2, the case main body 18b is mounted to the instrument panel P while the front panel 18a is exposed on an external environment so as to face with a passenger (a user). A front face 2a of the case 2, as an exposed outer surface of the front panel 18a at a left-hand side in Fig. 3, is arranged in parallel with the surface Pa of the instrument panel P when mounted to the instrument panel P. Thus, the front face 2a is arranged to slant at a predetermined angle to the vertical direction.

Furthermore, the front face 2a of the front panel 18a includes a CD insertion slot 8, a MD insertion slot 9 and operation apertures 13, all of which opening.

The CD insertion slot 8 is arranged to pass therein the CD to insert the CD into and eject the CD from the case 2, i.e. the CD player 3. The MD insertion slot 9 is arranged to pass therein the MD to insert the MD into and eject the MD from the case 2, i.e. the MD player 4. The operation apertures 13 penetrate through the front panel 18a. The operation apertures 13, i.e. the front panel 18a, are arranged to receive later-described operation buttons 11 of the operation portion 7 as well as to support the operation buttons 11 such that the operation buttons 11 move in the depth direction Y perpendicularly with respect to the front face 2a.

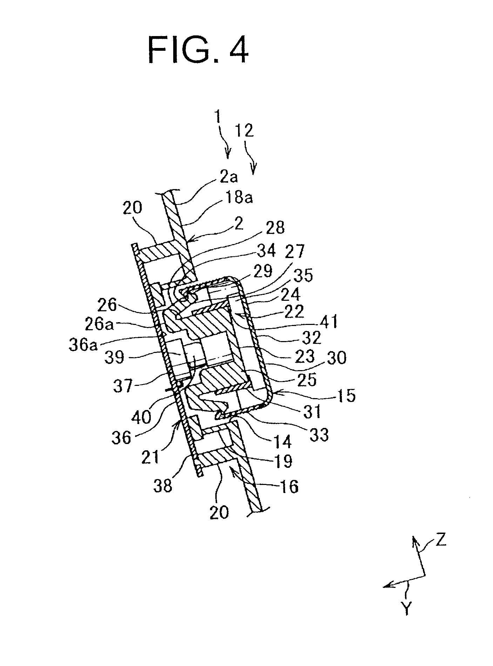

Furthermore, the case 2 is provide with an opening 14 and a structure fixing portion 16, as shown in Fig. 4. The opening 14 has a circular planar shape and opens into the front face 2a. The structure fixing portion 16 includes an inner tubular portion 19 and support columns 20. The inner tubular portion 19 is formed into a cylinder-like shape and extends perpendicularly from an inner edge portion of the opening 14 towards an inner side of the case 2.

The support columns 20 are provided at outside the inner tubular portion 19 and are provided to an upper side and a lower side with respect to the inner tubular portion 19, respectively. The support columns 20 extend perpendicularly from the front face 2a towards the inner side of the case 2. A later-described printed wiring board 36 is fixed to an end portion of the respective columns 20 distant from the front face 2a.

The CD player 3 reads out information from the CD inserted into the case 2 and outputs the information as a sound. The MD player 4 reads out information from the MD inserted into the case 2 and outputs the information as a sound. The AM/FM tuner 5 receives the radio broadcasting and outputs as a sound. These players 3, 4 and the tuner 5 are operated by the user pushing the operation buttons 11 and such of the operation portion 7.

The display portion 6 is provided with a display panel 10 for displaying information. The display panel 10 is arranged to expose from the front face 2a of the front panel 18a and is constituted of a fluorescent display mounted to the front panel 18a. The display portion 6 displays on the display panel 10 the information such as programs of the playing CD or MD or names of the broadcasting station received by the tuner 5.

The operation portion 7 includes the plurality of operation buttons 11 and an operation knob supporting structure 12 (hereinafter called the supporting structure, shown in Fig. 4 through Fig. 6). The respective operation buttons 11 received in the operation apertures 13 include a button main body arranged slidably along a direction perpendicular to the front face 2a and a switch mounted to a printed wiring board not shown provided in the case 2. The switch exerts a pushing force pushing the button main body in a direction of projection with respect to the front face 2a. Pushing the operation buttons 11 against the pushing force exerted by the switch operates the players 3, 4 and the tuner 5.

As shown in Fig. 4, the supporting structure 12 has a knob 15 arranged to move with respect to the case 2 of the AV equipment 1, a support portion 21 movably supporting the operation knob 15 and a fragile portion 22.

As shown in Fig. 4, the operation knob 15 has a mounting member 23 and an exposed member 24. The mounting member 23 includes a cylinder-like (tubular) member main body 25, a tilt regulating portion 26 and an engagement portion 27, all of which formed in one.

The member main body 25 has an inner diameter formed substantially the same as an outer diameter of a tip-end portion of the operation shaft 40 of a later-described switch 37. The member main body 25 is mounted to an outer circumference of the operation shaft 40 for example by engaging to the outer circumference at the tip-end portion of the operation shaft 40.

The tilt regulating portion 26 extends from an end of the member main body 25 close to the later-described printed wiring board 36 (the end to the depth of the case 2) towards the printed wiring board 36. In the drawings, the tilt regulating portion 26 is arranged across the entire circumference of the member main body 25. Thus, the tilt regulating portion 26 is formed into a circular tubelike shape. In addition, an end face 26a facing the printed wiring board 36 of the tilt regulating portion 26 is formed flat. Furthermore, the end face 26a is, under a condition in which the operation shaft 40 of the switch 37 is projected from a later-described switch main body 39, arranged in parallel with a surface 36a of the printed wiring board 36 and arranged with a space from the surface 36a,

The space provided between the end face 26a and the surface 36a of the printed wiring board 36 when the operation shaft 40 is projected from the switch main body 39, allows the operation shaft 40 of the switch 37 to retract into and project from the switch main body 39 and also allows the end face 26a to closely contact with the surface 36a of the printed wiring board 36a when a later-described projection portion 41 of the fragile portion 22 is fractured. The end face 26a is therefore arranged adjacent to the surface 36a of the printed wiring board 36. The end face 26a corresponds to the second flat face described in the attached claims.

The engagement portion 27 includes: an engagement portion main body 28 extending from an end of the tilt regulating portion 26 adjacent to the end face 26a towards the front face 2a of the case 2, i.e. extending away from the printed wiring board 36; and an engagement claw 29 formed integrally with the engagement portion main body 28 and arranged at an end of the engagement portion main body 28 near the front face 2a of the case 2.

The engagement portion main body 28 is continuous with an entire circumference of the tilt regulating portion 26 at the end thereof. Thus, the engagement portion main body 28 is formed into a cylinder-like shape. The engagement portion main body 28 extends from the tilt regulating portion 26 so a portion thereof near the front face 2a of the case 2 extends outwardly in the radial direction. The engagement claw 29 is arranged to project from the end of the engagement portion main body 28 in the radial direction towards to the inner tubular portion 19, so as to be engaged with a later-described engagement claw 34 of the exposed member 24. Thus, the engagement portion 27 engages with an inner circumferential face of the exposed member 24, with the engagement claw 29 being engaged to the engagement claw 34.

The exposed member 24 includes a bottomed-tubular member main body 30 and an inner supporting tube 31 formed integrally therewith. The bottomed-tubular member main body 30 is provided with a circular plate portion 32 and a tubular portion 33 formed integrally therewith and arranged to extend perpendicularly from an outer edge of the plate portion 32. The bottomed-tubular member main body 30 is provided with the engagement claw 34 at an end thereof which is arranged to project from an inner circumferential face of the tubular portion 33 and engage with the engagement portion 29.

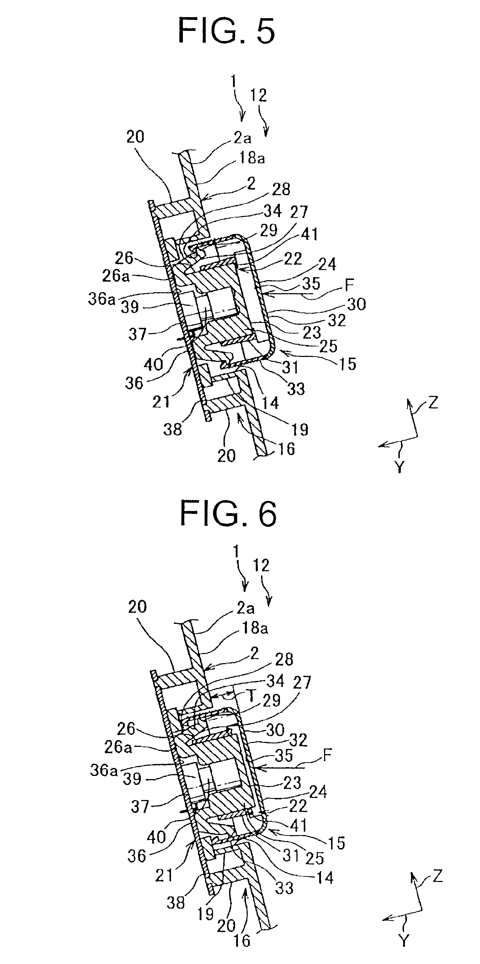

In addition, the engagement claw 29 of the engagement portion 27 is arranged to be strong enough to forbid the engagement claw 29 being unengaged from the exposed member 24, when a pushing force F (shown with an arrow in Fig. 5) towards the front face 2a along a longitudinal direction of the motor vehicle (horizontal direction) is applied to the exposed member 24 of the operating knob 15, and the exposed member 24 tends to rotate (tilt) about a lower portion of the projection portion 41 of the fragile portion 22 at a lower side in Fig. 4.

The cylinder-like shaped inner supporting tube 31 is arranged to extend perpendicularly from the plate portion 32 via a piece 35. The inner supporting tube 31 is spaced from the plate portion 32. The inner supporting tube 31 is arranged to engage with an outer circumferential face of the member main body 25 of the mounting member 23 to be mounted to the member main body 25, i.e. the mounting member 23.

The support portion 21 received inside the case 2 includes the printed wiring board 36 as an installation member and a switch 37 as a support member mounted (installed) to the printed wiring board 36.

The printed wiring board 36 includes an insulation base 38 and a conductive patterns formed on a surface thereof. The printed wiring board 36 is fixed to respective tip ends of the supporting columns 20 so the surface 36a is parallel to the front face 2a. The surface 36a of the printed wiring board 36 corresponds to the flat face described in the attached claims.

The switch 37 includes: a switch main body 39 fixed to the printed wiring board 36; and the operation shaft 40 arranged to project from the switch main body 39 and arranged to move in a direction of rotation, retraction and projection with respect to the switch main body 39. The operation shaft 40 is formed into a cylinder-like shape and press-fitted into the member main body 25 of the mounting member 23 for mounting the operation knob 15. In this manner, the switch 37 supports the operation knob 15. With the operation shaft 40, the operation knob 15 rotates about the operation shaft 40 and moves in a direction of retraction and projection with respect to the front face 2a. Of course, the operation knob 15 is arranged to project from the front face 2a. A projection of the operation knob 15 from the front face 2a is larger than a predetermined value such as 9.5 mm specified in the ECE regulations No. 21 - uniform provisions concerning the approval of vehicles with regard to their interior fittings. In addition, the plate portion 32 of the operation knob 15 is arranged in parallel with the front face 2a.

The fragile portion 22 is arranged spaced apart from the plate portion 32 of the exposed member 24 of the operation knob 15 and is provided with the projection portion 41 projecting from an inner circumferential face of the inner supporting tube 31. The fragile portion 22, in this embodiment, is provided integrally with the exposed member 24 of the operation knob 15. The projection portion 41 is disposed on a tip-end face of the member main body 25 of the mounting member 23. In the present invention, the expression of the fragile portion 22 being arranged between the mounting member 23 and the exposed member 24 corresponds to the projection portion 41 being arranged to project from the inner circumferential face of the inner supporting tube 31 and disposed on the tip-end face of the member main body 25 of the mounting member 23. For the fragile portion 22, when a force (indicated with an arrow F in Fig. 5) towards the front face 2a in the longitudinal direction of the vehicle (horizontal direction) exceeding a predetermined force is applied to the operation knob 15, a portion between the projection portion 41 and the inner circumferential face of the inner supporting tube 31 fractures. Then, the operation knob 15 is allowed to retract into the opening 14, i.e. the front face 2a of the front panel 18a, until a projection of the knob 15 from the front face 2a of the case 2 is less than the above-described predetermined value. Then, the end face 26a of the tilt regulating portion 26 closely contacts in the overlapping relationship with the surface 36a of the printed wiring board 36, thus the mounting member 23 is approximated to the plate portion 32 of the exposed member 24. Thus, for the fragile portion 22, the fracturing of the projection portion 41 allows the operation knob 15 to retract into the opening 14, i.e. into the front face 2a of the front panel 18a.

The aforementioned supporting structure 12 is assembled by mounting the printed wiring board 36 having the switch 37 to the support columns 20. Subsequently, the operation knob 15 is mounted to the operation shaft 40 of the switch 37. Accordingly, the surface 36a of the printed wiring board 36 is arranged parallel with the front face 2a of the front panel 18a, and the longitudinal direction of the operation shaft 40 of the switch 37 is arranged perpendicularly with respect to the front face 2a. In this case, the projection portion 41 of the fragile portion 22 is disposed on the tip-end face of the member main body 25 of the mounting member 23, and the end face 26a of the tilt regulating portion 26 is arranged parallel with and adjacent to the surface 36a of the printed wiring board 36, while being spaced therefrom.

For the support structure 12, when the operation knob 15 is pushed, the switch 37 detects this pushing and turns on/off the power of the AV equipment 1, and when the operation knob 15 is rotated about the central axis thereof, the switch 37 detects this rotation and adjusts volume of playing or receiving program.

Furthermore, for the support structure 12, when the force F (indicated with an arrow in Fig. 5) pushing the operation knob 15 towards the front face 2a of the front panel 18a along the longitudinal direction of the vehicle (horizontal direction) is applied to the operation knob 15, first the operation shaft 40 of the switch 37 retracts into the switch main body 39, as shown in Fig. 5. Subsequently, the projection portion 41 of the fragile portion 22 fractures from the inner circumferential face of the inner supporting tube 31 without tilting the exposed member 24, i.e. the operation knob 15, with respect to the case 2, and the tilt of the exposed member 24 is forbidden by: the mounting member 23 engaged to the outer circumference at the tip-end portion of the operation shaft 40 of the switch 37; the inner supporting tube 31 of the exposed member 24 engaged to the outer circumference of the mounting member 23; and the engagement claws 29, 34 engaged with respect to each other.

Then, the above-described force F moves the exposed member 24 guided by the outer circumferential face of the member main body 25 of the mounting member 23 and the inner circumferential face of the inner supporting tube 31 of the exposed member 24 in the direction of retraction into the opening 14, i.e. into the front face 2a. Then, the end face 26a will closely contact in the overlapping relationship with the surface 36a of the printed wiring board 36. Once the end face 26a and the surface 36a closely contact each other, the exposed member 24 is effectively prevented from tilting relative to the case 2 and is further moved towards the direction of retraction into the opening 14, i.e. the front face 2a, guided by the outer circumferential face of the member main body 25 of the mounting member 23 and the inner circumferential face of the inner supporting tube 31 of the exposed member 24. Thus, the tilt regulating portion 26 contacts with the printed wiring board 36 of the support portion 21 to regulate the rotation of the operation knob 15. Then, as shown in Fig. 5, a projection T of the operation knob 15 from the front face 2a becomes less than the above-mentioned predetermined value.

According to this embodiment, there is provided with the tilt regulating portion 26 which prevents the operation knob 15 from tilting with respect to the case 2 by contacting with the printed wiring board 36 of the support portion 21 when the projection portion 41 of the fragile portion 22 is fractured. Thus, when the projection portion 41 of the fragile portion 22 is fractured, the tilt regulating portion 26 will certainly contact with the support portion 21 to forbid the operation knob 15 from tilting. Consequently, when the predetermined force is applied to the operation knob 15, the fragile portion 22 will certainly fracture to allow the operation knob 15 to securely retract into the case 2 until the projection of the operation knob 15 from the member main body 30 is less than the predetermined value.

Furthermore, the tilt regulating portion 26 is provided with the end face 26a as the second flat face arranged to closely contact in the overlapping relationship with the surface 36a of the printed wiring board 36. Thus, when the projection portion 41 of the fragile portion 22 is fractured, the surface 36a of the printed wiring board 36 and the end face 26a of the tilt regulating portion 26 will closely contact each other in the overlapping relationship, thereby effectively preventing the operation knob 15 from tilting.

Furthermore, the operation knob 15 is provided with the mounting member 23 mounted to the outer circumference of the operation shaft 40 of the switch 37 of the support portion 21 and the exposed member 24 mounted to the outer circumference of the mounting member 23 and having the fragile portion 22 arranged between the mounting member 23 and the exposed member 24. Thus, even if the exposed member 24 tends to tilt about the fragile portion 22 due to the horizontal force F towards the front face 2a of the front panel 18a applied to the exposed member 24 of the operation knob 15, a large diameter between the fragile portion 22 and the mounting member 23 firmly holds the exposed member 24. Thus, the exposed member 24 is prevented from tilting. As a result, the exposed member 24, i.e. the operation knob 15, is further prevented from tilting relative to the case 2.

Furthermore, the mounting member 23 is provided with the engagement portion 27 which engages the mounting member 23 to the inner circumferential face of the exposed member 24. Thus, when the horizontal force F towards the front face 2a is applied to the operation knob 15, the exposed member 24 is supported by the mounting member 23 via the engagement portion 27, forbidding the rotation of the exposed member 24. As a result, the exposed member 24, i.e. the operation knob 15, is further prevented from tilting relative to the case 2.

Furthermore, since the AV equipment 1 is provided with the above-described operation knob supporting structure 12, when the predetermined force is applied to the operation knob 15, the fragile portion 22 will certainly fracture to certainly allow the operation knob 15 to retract into the front panel 18a until the projection T of the operation knob 15 from the front panel 18a is less than the predetermined value.

In the above-described embodiment, the operation knob 15 is constituted of the mounting member 23 and the exposed member 24. However, in the present invention, the operation knob 15 may be constituted of one component. Furthermore, in the above-described embodiment, the tilt regulating portion 26 is provided with the end face 26a arranged parallel to the surface 36a of the printed wiring board 36. However, in the present invention, the tilt regulating portion 26 may be arranged without the end face 26a parallel to the surface 36a of the printed wiring board 36. The point is that, in the present invention, the tilt regulating portion 26 should be arranged so as when the exposed member 24, i.e. the operation knob 15, retracts into the opening 14, the tilt regulating portion 26 contacts with the support portion 21 of the operation knob 15 to forbid the rotation of the operation knob 15.

In the above-mentioned embodiment, the AV equipment 1 mounted to the motor vehicle is indicated as the electric equipment. However, the present invention may be applied to a variety of other electric equipment.

According to the above-described embodiment, a below-described support structure 12 can be obtained.

(Appendix) An operation knob supporting structure 12, including: an operation knob 15 which is arranged to project from a front face 2a of a case 2 slanted relative to a vertical direction and which is arranged to be movable with respect to the case 2; a switch 37 supporting the operation knob 15; a printed wiring board 36 having the switch; a fragile portion 22 arranged to fracture when a horizontal force F pushing the operation knob 15 towards the front face 2a exceeds a predetermined force to allow the operation knob 15 to retract into the front face 2a of the case 2; and a tilt regulating portion 26 arranged to contact with the printed wiring board 36 when the fragile portion 22 is fractured to forbid the operation knob 15 from tilting.

According to the description of the appendix, there is provided the tilt regulating portion 26 arranged to contact with the printed wiring board 36 when the fragile portion 22 is fractured to prevent the operation knob 15 from tilting. Thus, when the fragile portion 22 is fractured, the tilt regulating portion 26 will certainly contact with the printed wiring board 36, forbidding the operation knob 15 from tilting. Consequently, when the predetermined force is applied to the operation knob 15, the fragile portion 22 will certainly fracture, allowing the operation knob 15 to retract into the case 2 until a projection of the operation knob 15 from the member main body 30 is less than the predetermined value.

It is intended that the above-described embodiments are only representative embodiments, and it should be understood that the present invention is not limited thereto. Various changes and modifications can be made without departing the scope of the present invention.

## Claims

1. An operation knob supporting structure, comprising:
an operation knob projecting from an outer surface of a main body portion and arranged to move with respect to the main body portion, the main body portion being slanted with respect to a vertical direction;
a support member supporting the operation knob;
an installation member to which the support member is installed;
a fragile portion arranged to fracture when a horizontal force pushing the operation knob towards the outer surface exceeds a predetermined force to allow the operation knob to retract into the outer surface of the main body portion;
a tilt regulating portion arranged to contact with the installation member when the fragile portion is fractured to forbid the operation knob from tilting.

2. The operation knob supporting structure according to claim 1, wherein the installation member is provided with a flat face arranged parallel with the outer surface of the main body portion, and
wherein the tilt regulating portion is provided with a second flat face arranged parallel with the flat face and arranged to closely contact with the flat face when the fragile portion is fractured.

3. The operation knob supporting structure according to claim 1 or 2, wherein the support member is a switch having a switch main body and an operation shaft arranged to retract into and project from the switch main body,
wherein the operation knob is provided with: a mounting member mounted to an outer circumference of the operation shaft; and an exposed member mounted to an outer circumference of the mounting member and exposed to outside of the main body portion, and
wherein the exposed member is provided with the fragile portion arranged between the mounting member and the exposed member.

4. The operation knob supporting structure according to claim 3, wherein the mounting member comprises an engagement portion arranged to be engaged to an inner circumferential face of the exposed member.

5. Electrical equipment having a main body portion which is arranged so an outer surface thereof is slanted relative to a vertical direction and which is provided with an operation knob projecting from the outer surface, the operation knob being arranged to move with respect to the main body portion, comprising:
an operation knob supporting structure according to any one of claims 1 to 4.
